# EUROPÄISCHE PATENTANMELDUNG

(11) **EP 3 246 691 A1**
(43) Veröffentlichungstag der Anmeldung: **22.11.2017**
(21) Anmeldenummer: 17171805.9
(22) Anmeldetag: 18.05.2017
(51) Int. Cl.: G01N 1/06, B26D 5/00, B26D 7/01

(54) **MIKROTOM MIT LASERDIODESTEUERUNG DER PRÄPARATPOSITION**

(30) Priorität: 19.05.2016 AT 2512016
(71) Anmelder: Luttenberger, Herbert, 9300 Sankt Veit a.d. Glan (AT); Tomic, Robert, 8010 Graz (AT)
(72) Erfinder: Luttenberger, Herbert, 9300 Sankt Veit a.d. Glan (AT); Tomic, Robert, 8010 Graz (AT)
(74) Vertreter: Beer & Partner Patentanwälte KG

(57) **Zusammenfassung**

Die Präparathalterung (5) eines Mikrotoms (1) ist über einen Kugelkopf (15) verschwenkbar. Zum Schwenken der Präparathalterung (5) sind dieser als Antriebe (8, 9) Stellmotoren zugeordnet. Am Messerträger (6) des Mikrotoms (1) sind zum Erfassen der Form und Legen des Präparates (10) eine Kamera (16) und Laserdioden (17) angeordnet.

## Beschreibung

Die Erfindung betrifft ein Mikrotom mit den Merkmalen des einleitenden Teils von Anspruch 1.

Bekannte Mikrotome weisen eine Vielzahl von an unterschiedlichen Stellen des Mikrotoms und mit Abstand voneinander angeordneten Bedienelementen auf, mit denen das Mikrotom eingestellt, die Funktion des Mikrotoms gewählt und der Betrieb des Mikrotoms gesteuert wird.

So können mit Hilfe von Bedienelementen die Bewegungen der Präparathalterung aus ihrer Bereitschaftsstellung in ihre Wirkstellung, in der das Präparat dem Messer des Mikrotoms zugeordnet ist, ausgelöst werden. Auch das Ausmaß des Vorschubes, also des Hubes der Präparathalterung vor den einzelnen Schneidvorgängen, wird mit Hilfe von Bedienelementen gesteuert und eingestellt.

Weitere Bedienelemente dienen dazu, die Geschwindigkeit, mit der Schneidvorgänge aufeinander folgen, an das zu schneidende Präparat anzupassen.

Bei bekannten Mikrotomen ist es oft noch erforderlich, die Bewegungen vor, während und nach Schneidvorgängen durch Betätigen einer Hand-Kurbel zu bewirken, wenn hiefür kein motorischer Antrieb vorgesehen ist.

Die bei bekannten Mikrotomen vorgesehene Handkurbel stört (Platzbedarf!) und ist nicht ungefährlich, weil die Handkurbel sich auch bewegt, wenn Schneidvorgänge motorisch, z.B. in einem Automatikbetrieb, ausgeführt werden.

Durch die Vielzahl von an unterschiedlichen Stellen des Mikrotoms angeordneten Bedienelementen ("Tasten" und "Schalter"), auf die eine Bedienperson zugreifen und diese betätigen muss, wenn das Mikrotom verwendet wird, und mit Rücksicht darauf, dass Schnitte, insbesondere in Krankenhäusern, unter Zeitdruck, also rasch und in großer Zahl herzustellen sind, ergibt sich eine erhebliche Belastung und ein Stress der Person, die das Mikrotom bedient, um Schnitte herzustellen. Daraus können sich Fehlbedienungen des Mikrotoms und in der Folge unbrauchbare Schnitte ergeben.

Bekannt ist ein Mikrotom der Hess Consult GmbH (Walldorf/BRD), bei dem einige der Funktionen des Mikrotoms mit Hilfe eines nach mehreren Richtungen schwenkbaren und verdrehbaren Knopfes, der seitlich am Gehäuse des Mikrotoms angeordnet ist, angesteuert werden können. Für das Ausführen der eigentlichen Schneidvorgänge, um Schnitte des Präparates zu erzeugen, bei denen die Präparathalterung relativ zum Messer nach unten bewegt wird, ist das Betätigen einer am Gehäuse des bekannten Mikrotoms der Hess Consult GmbH seitlich angeordneten Handkurbel erforderlich. Weitere Funktionen des Mikrotoms der Hess Consult GmbH werden über ein Touch-Display und mit Hilfe eines weiteren Dreh- und Drückknopfes angesteuert. Somit sind für das Bedienen des bekannten Mikrotoms der Hess Consult GmbH mehrere, mit Abstand voneinander angeordnete Bedienorgane vorgesehen, die voneinander unabhängig betätigt werden müssen, um die horizontale Vor- und Rückwärtsbewegung des Objektkopfes (Präparatehalterung), die vertikale Schneidbewegung, die Geschwindigkeit, die Start-/Stop-/Bremsfunktion, die elektrische Handradfunktion und schließlich das Eingeben und automatische Anfahren der Memo-Position anzusteuern.

Bei dem bekannten Mikrotom der Hess Consult GmbH ist der Messerträger am Gehäuse des Mikrotoms verstellbar angeordnet. So kann die Lage des Messers bezüglich des Präparates eingestellt werden. Die Anordnung des Messerträgers auf Schienen dient nicht nur dazu, den Messerträger mit dem Messer zu justieren, sondern erlaubt es auch, dass der Messerträger zum Reinigen und zum Tauschen des Messers vom Mikrotom abgenommen wird. Beim Herstellen von Schnitten wird aber nicht der Messerträger verstellt, sondern die Präparathalterung nach jedem Schneidvorgang um einen Schritt (Schnittdicke) vorwärts bewegt, wie dies bei bekannten Mikrotomen üblich ist.

Ein Problem bei bekannten Mikrotomen ist auch der Umstand, dass die Präparathalterung nach jedem Schneidvorgang und vor einem nachfolgenden Schneidvorgang vorgeschoben wird. Dadurch wird der Abstand des Präparates von der Führung der Präparathalterung zunehmend größer, was ein nachteiliges Abnehmen der Genauigkeit der Lage des Präparates gegenüber dem Messer zur Folge hat und ungenaue Schnitte ergibt. Dabei ist zu berücksichtigen, dass die Stärke (= Dicke) der Schnitte, insbesondere bei Schnitten von menschlichen Geweben, die in der Medizin benötigt werden, in der Größenordnung von einigen wenigen Mikron liegt.

Es ist bei Mikrotomen auch bekannt, die Ausrichtung des Präparates in der Präparathalterung von Hand aus durch das Betätigen von Stellschrauben, die an der Präparathalterung vorgesehen sind, auf die optimale Ausrichtung des Präparates einzustellen. Dieses Einstellen der Ausrichtung des Präparates ist, insbesondere bei Präparaten aus menschlichem Gewebe, die in einen Körper aus einem Gemenge (z.B. PARAPLAST" von Sigma Aldrich) aus Paraffin und einem Kunststoff (z.B. Polyisobutylen), der auf einer Seite (der Rückseite) ein Gitter trägt, eingebettet sind, wesentlich, da praktisch immer nur "wenig" Gewebe zur Verfügung steht, und dennoch für das mikroskopische Untersuchen der Schnitte passende und geeignete Schnitte erforderlich sind. Auch soll der Verlust an Präparat beim Herstellen ("Anschnitt") der für den ersten Schnitt passenden Außenfläche des Präparates gering sein.

Der Erfindung liegt die Aufgabe zu Grunde, die vorstehend geschilderten Nachteile von Mikrotomen zu vermeiden, indem das Ausrichten des Präparates in der Präparathalterung vereinfacht wird.

Gelöst wird diese Aufgabe mit einem Mikrotom, das die Merkmale von Anspruch 1 aufweist.

Bevorzugte und vorteilhafte Ausgestaltungen des erfindungsgemäßen Mikrotoms sind Gegenstand der Unteransprüche.

Da bei dem erfindungsgemäßen Mikrotom der Präparathalterung wenigstens ein die Lage des Präparates erfassender Sensor und ein Antrieb zum Einstellen der Lage des Präparates durch Verstellen der Präparathalterung zugeordnet ist, wird das Präparat selbsttätig optimal ausgerichtet, ohne dass das Einstellen von Hand aus vorgenommen werden muss.

Durch die bei dem erfindungsgemäßen Mikrotom gegebene Möglichkeit, das Präparat auszurichten, wird nicht nur der Ausschuss an Präparat, der beim Anschneiden desselben anfällt, klein gehalten, weil die Vorderseite des Präparates so gut wie möglich ausgerichtet werden kann, sondern es ergibt sich überdies der Vorteil, dass das Messer geschont wird und dass die Zeit bis zum Erhalten des ersten brauchbaren Schnittes verkürzt wird.

In einer bevorzugten Ausführungsform ist die Präparathalterung des erfindungsgemäßen Mikrotoms über eine kugelkopfartige Lagerung gehalten. Dies erlaubt ein weitgehend freies Ausrichten der Präparathalterung nach mehreren Freiheitsgraden und Richtungen durch Schwenken derselben.

In einer Ausführungsform ist zum Erfassen der Vorderseite des in die Präparathalterung eingesetzten Präparates eine Kamera, vorzugsweise eine HD-Kamera, vorgesehen. Diese Kamera kann am Messerträger, auf die Präparathalterung hin gerichtet, angeordnet sein. Diese Kamera erfasst das Präparat, wobei der Präparatträger mit dem Präparat auf und ab bewegt wird. Die so erfassten Daten des Präparates werden gespeichert.

Wenn das abgeschlossen ist, wird das Präparat von, beispielsweise am Messerträger angeordneten und dem Präparatträger zugewendeten, Laser-Dioden, insbesondere mit unterschiedlichen Winkeln (unterschiedlich ausgerichtete Ebenen, in denen gescannt wird), gescannt. Dabei erfasst die Kamera das reflektierte Laser-Licht. Die so erfassten Daten der Lage des Präparates relativ zum Messerträger werden ebenfalls gespeichert.

Auf Grundlage der so erfassten Daten der Lage und Form der Vorderseite des Präparates werden die Präparathalterung und vorzugsweise auch das Messer im Messerträger so ausgerichtet und eingestellt, dass der Ausschuss an Präparat beim ersten Schneidvorgang (Anschnitt) klein ist.

Weitere Einzelheiten und Merkmale der Erfindung ergeben sich aus der nachstehenden Beschreibung eines bevorzugten Ausführungsbeispiels eines erfindungsgemäßen Mikrotoms. Es zeigt:
- Fig. 1: ein Mikrotom in Schrägansicht,
- Fig. 2: das Mikrotom aus Fig. 1 in Seitenansicht,
- Fig. 3: eine Einzelheit des Mikrotoms im Bereich der Präparathalterung,
- Fig. 4: eine Einzelheit des Mikrotoms im Bereich des Messerträgers,
- Fig. 5: einen Bedienungshebel,
- Fig. 6: eine schematische Anordnung zum Justieren der Präparathalterung in Schrägansicht und
- Fig. 7: die Anordnung aus Fig. 6 mit zugeordneter Präparathalterung.

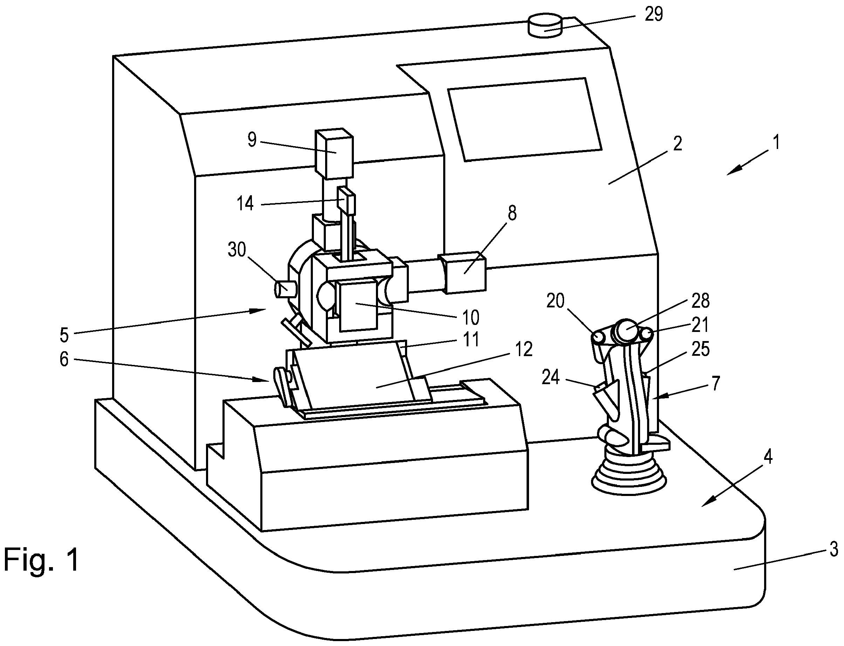

Ein in den Fig. 1 bis 5 gezeigtes Mikrotom 1 umfasst ein Gehäuse 2, in dem weitere Bauteile des erfindungsgemäßen Mikrotoms, wie Antriebe und dergleichen, untergebracht sind, und eine Grundplatte 3.

Das Mikrotom 1 weist eine Präparathalterung 5 auf, die vom Gehäuse 2 nach vorne absteht und über einen vorderen Bereich 4 der Grundplatte 3 des Mikrotoms 1 ragt. Der Antrieb für das Bewegen der Präparathalterung 5 zur Grundplatte 3 hin (nach unten) und von der Grundplatte 3 weg (nach oben) ist in dem Gehäuse 2 untergebracht. Die Präparathalterung 5 ist bei dem erfindungsgemäßen Mikrotom 1 - anders als bei bekannten Mikrotomen - in einer zur Grundplatte 3 parallelen Richtung (horizontal) nicht verstellbar.

Im vorderen Bereich 4 der Grundplatte 3 des Mikrotoms 1 ist ein Messerträger 6 angeordnet.

Des Weiteren ist im vorderen Bereich 4 der Grundplatte 3 des Mikrotoms 1 im gezeigten Ausführungsbeispiel rechts vom Messerträger 6 ein Bedienungshebel 7 in Form eines Joy-Stick vorgesehen.

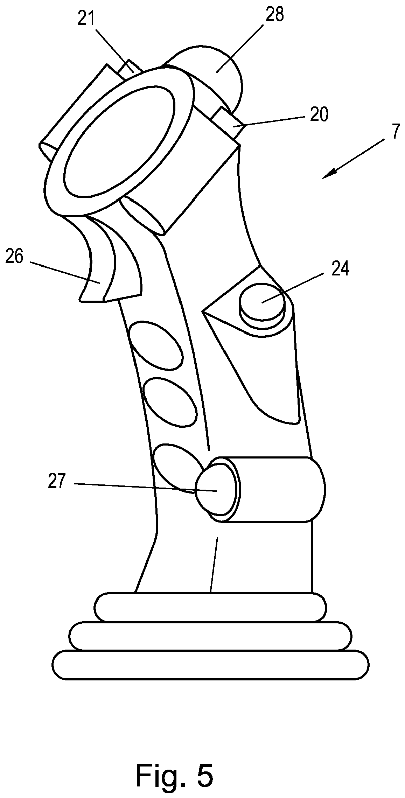

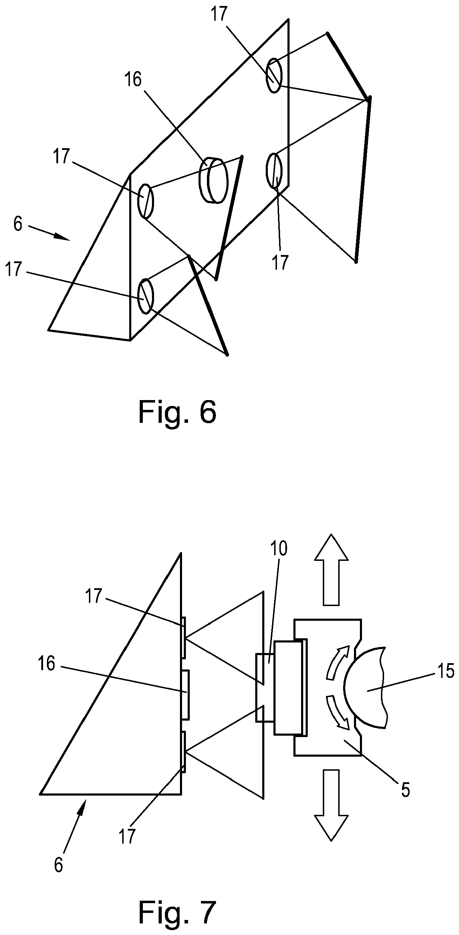

Die Präparathalterung 5 ist bei dem erfindungsgemäßen Mikrotom 1 mit Hilfe von Antrieben 8 und 9 justierbar, wie dies im Einzelnen weiter unten unter Bezugnahme auf die Fig. 5 und 6 noch erläutert werden wird.

Beim Ausführen eines Schneidvorganges zum Herstellen eines Schnittes des Präparates 10, das in der Präparathalterung 5 eingespannt ist, wird das Präparat 10 durch Absenken der Präparathalterung 5 auf den vorderen Bereich 4 der Grundplatte 3 hin nach unten bewegt, wobei das Messer 11 durch die Relativbewegung einen Schnitt erzeugt, der auf einem Auflagebereich 12 des Messerträgers 6 zu liegen kommt.

Bei dem erfindungsgemäßen Mikrotom 1 wird vor und nach dem Ausführen eines Schnittes der Messerträger 6 mit dem Messer 11 in die für die gewünschte Dicke des herzustellenden Schnittes richtige Stellung bewegt.

Nach jedem Schneidvorgang wird das Messer 11 durch Verschieben des Messerträgers 6 ein kleines Stück zurückbewegt (z.B. 20 µm) und dann um die gewünschte Schnittdicke zusätzlich um den vorher ausgeführten Rückhub wieder vorgeschoben. Durch den Rückhub des Messers 11 nach jedem Schneidvorgang wird verhindert, dass das Präparat 10 beim Zurückbewegen (Anheben) der Präparathalterung 5 in die Ausgangslage am Messer 11 schleift, weil sich das Präparat 10 erfahrungsgemäß nach jedem Schneidvorgang etwas ausdehnt.

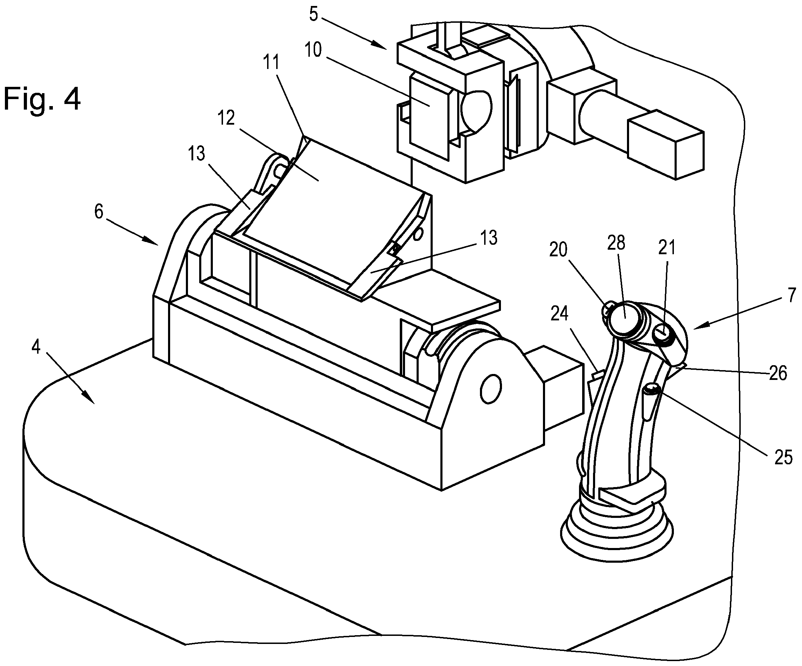

Für das Verstellen des Messerträgers 6 ist dieser, wie in Fig. 4 angedeutet, auf im vorderen Bereich 4 der Grundplatte 3 (Basis) des Mikrotoms 1 angeordneten Führungsschienen 13 verschiebbar, wozu dem Messerträger 6 nicht gezeigte Antriebe zugeordnet sind.

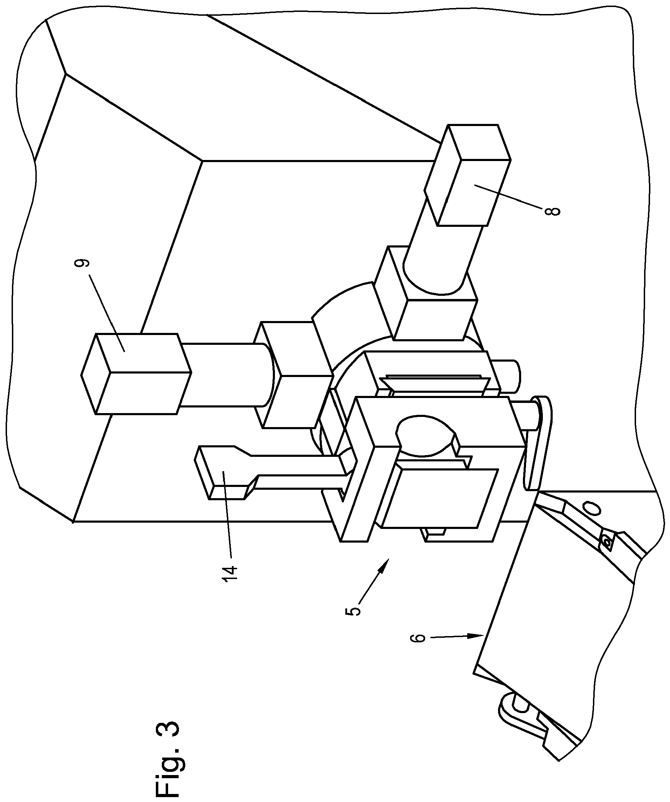

Die Präparathalterung 5, die mit Hilfe einer Schraube 30 am Objektarm befestigt ist und die in größeren Einzelheiten in Fig. 3 gezeigt ist, umfasst, wie an sich für Mikrotome üblich, einen Hebel 14 zum klemmenden Einspannen des Körpers, in dem das Präparat 10 eingebettet ist. An der Präparathalterung 5 sind weiters zwei mit Ansätzen (Handhaben) versehende Haltestifte (einer weist gerade nach unten, der andere weist schräg nach unten) vorgesehen, die den vorderen Teil der Präparathalterung 5 festlegen. Nach Lösen der Haltestifte kann ein in der Präparathalterung 5 eingesetzter Adapter für das Präparat 10 entnommen und gegen einen anderen Adapter getauscht werden.

Die Präparathalterung 5 ist über einen Kugelkopf 15 gelagert, sodass sie durch die Antriebe 8 und 9 verschwenkt werden kann, wodurch das Präparat 10 relativ zu dem Messer 11 am Messerträger 6 in die für das Erzeugen von Schnitten optimale Lage ausgerichtet werden kann.

Die Anordnung, welche die Antriebe 8 und 9 für das Justieren der Präparathalterung 5 ansteuert, damit diese die Präparathalterung 5 durch Schwenken der Präparathalterung 5 in die erwähnte optimale Stellung bewegen (schwenken), umfasst beispielsweise auf der der Präparathalterung 5 zugekehrten Seite des Messerträgers 6 eine Kamera 16, insbesondere eine HD-Kamera. Die Kamera 16 erfasst das Präparat 10, wobei die Präparathalterung 5 mit dem Präparat 10 auf und ab bewegt wird, sodass die Kamera 16 die gesamte Vorderseite des Präparates 10 erfassen ("scannen") kann. Die so von der Kamera 16 erfassten Daten werden gespeichert. Sobald die Daten, welche die Kamera 16 erfasst hat, gespeichert sind, wird das Präparat 10 erneut gescannt. Hierzu umfasst die Anordnung zum Erfassen des Präparates 10 im Ausführungsbeispiel vier Laserdioden 17, die am Messerträger 6 um die Kamera 16 herum angeordnet sind. Wie in Fig. 6 gezeigt, sind die Laserdioden 17 nach unterschiedlichen Winkeln ausgerichtet, sodass durch Scannen mit Hilfe der Laserdioden 17 in unterschiedlichen Ebenen die Form der Vorderseite des Präparates 10 und des Körpers, in dem das Präparat 10 eingebettet ist, zuverlässig erfasst wird. Die Kamera 16 erfasst das reflektierte Laserlicht und speichert die so erfassten Daten der Lage des Präparates 10 relativ zum Messerträger 6.

Aufgrund der so erfassten Daten der Lage und Form der Vorderseite des Präparates 10 und des Körpers, in dem das Präparat 10 eingebettet ist, wird die Präparathalterung 5 mit Hilfe der ihr zugeordneten Antriebe 8 und 9 (Stellmotoren) durch Verschwenken um den Mittelpunkt des Kugelkopfes 15, über den die Präparathalterung 5 gehalten ist, so ausgerichtet und eingestellt, dass der Ausschuss an Präparat 10 nach dem ersten Schneidvorgang (Anschnitt) so klein wie möglich ist.

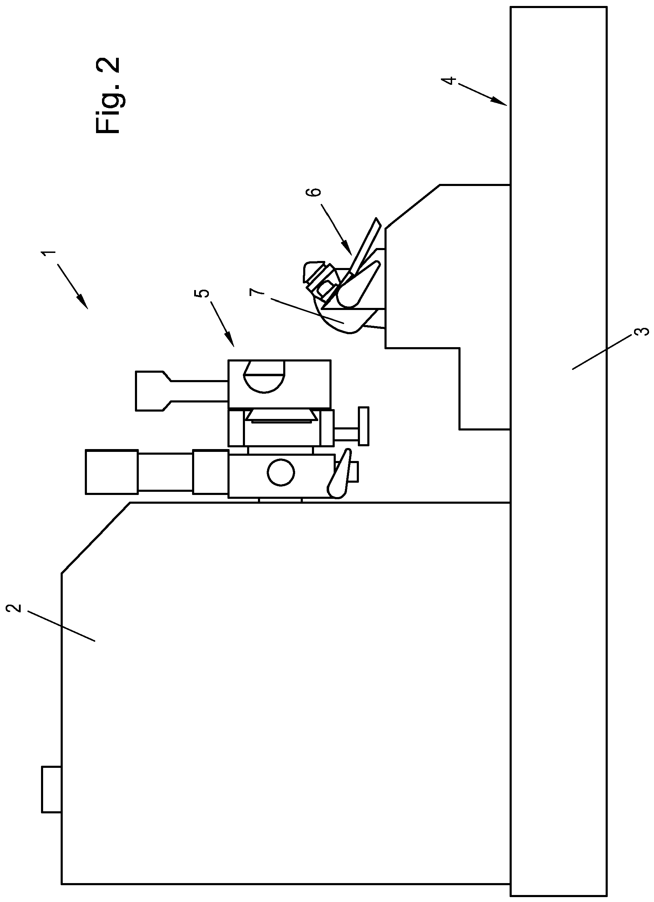

Für das Bedienen des Mikrotoms 1 ist an Stelle der sonst üblichen Bedienknöpfe und Handkurbeln der Bedienungshebel 7 vorgesehen, der nach Art eines Joy-Stick ausgebildet ist. Der Bedienungshebel 7 ist in einer zur Grundplatte 3 senkrecht stehenden Ebene um ein im Bereich der Grundplatte 3 angeordnetes Schwenkzentrum schwenkbar (kippbar). Die Ebene, in welcher der Bedienungshebel 7 schwenkbar ist, ist etwa senkrecht zur Bildebene von Fig. 1 bzw. parallel zur Bildebene von Fig. 2 ausgerichtet. Zusätzlich kann der Bedienungshebel 7 in einer zur Bildebene von Fig. 2 senkrecht ausgerichteten Ebene schwenkbar (kippbar) sein.

Die Funktionen des Bedienungshebels 7 sind die folgenden:

Durch Verschwenken des Bedienungshebels 7 vom Gehäuse 2 des Mikrotoms 1 weg wird das Bedienelement, das die Geschwindigkeit, mit der das Mikrotom 1 arbeitet, so betätigt, dass die Geschwindigkeit stufenlos verkleinert wird. Je weiter der Bedienungshebel 7 vom Gehäuse 2 weg geschwenkt wird, desto mehr wird die Geschwindigkeit, mit der das Mikrotom 1 arbeitet, verkleinert.

Wenn der Bedienungshebel 7 zum Gehäuse 2 hin geschwenkt wird, wird das Bedienelement, das die Geschwindigkeit, mit der das Mikrotom 1 arbeitet, so betätigt, dass die Geschwindigkeit erhöht wird. Je weiter der Bedienungshebel 7 zum Gehäuse 2 hin geschwenkt wird, desto mehr wird die Geschwindigkeit, mit der das Mikrotom 1 arbeitet, erhöht.

So kann die Arbeitsgeschwindigkeit, also die Geschwindigkeit, mit der Schnitte erzeugt werden (Schneidegeschwindigkeit), stufenlos auf den jeweils optimalen Wert eingestellt werden, wobei mit Hilfe des Bedienungshebels 7 gleichzeitig Bewegungen des Messerträgers 6 (Vorschub und Rückhub des Messers 11) ausgelöst werden können, indem hierfür am Bedienungshebel 7 vorgesehene Tasten, denen Schalter zugeordnet sind, betätigt (gedrückt) werden.

Für das Auslösen der Bewegungen des Messerträgers 6 (Vorschub zur Präparathalterung 5 hin und Rückhub von der Präparathalterung 5 weg) sind am freien Ende des Bedienungshebels 7 Tasten 20 und 21 vorgesehen.

Das Ändern der Schneidegeschwindigkeit durch Verschwenken des Bedienungshebels 7 zum Gehäuse 2 hin oder vom Gehäuse 2 weg kann gleichzeitig mit dem Verstellen des Messerträgers 6 (Vorschub und Rückhub) erfolgen, indem beim Schwenken des Bedienungshebels 7 auch die Taste 20 oder 21 betätigt wird.

Die Geschwindigkeit, mit welcher der Messerträger 6 bewegt wird, wenn er seine Bewegung zur Präparathalterung 5 hin und von dieser weg ausführt, kann durch das zuvor beschriebene Schwenken des Bedienungshebels 7 (insbesondere stufenlos) eingestellt werden.

Für das Einstellen der Schnittdicke sind am Bedienungshebel 7 seitlich Tasten 24 und 25 vorgesehen. Das Einstellen der Schnittdicke kann gleichzeitig mit dem Ändern der Schneidegeschwindigkeit erfolgen. Dies erfolgt beispielsweise dadurch, dass die Taste 24 "+" für das Vergrößern der Schnittdicke oder die Taste 25 "-" für das Verringern der Schnittdicke, gegebenenfalls gleichzeitig mit dem Verschwenken des Bedienungshebels 7 zum Ändern der Schneidegeschwindigkeit, betätigt wird.

Durch das Betätigen einer weiteren Taste 26, die auf der dem Gehäuse 2 zugekehrten Seite des Bedienungshebels 7 vorgesehen ist, kann das Anschneiden des Präparates 10 (z.B. 15 µm stufenlos am Mikrotom 1 programmierbar) ausgewählt werden.

Auf dem Bedienungshebel 7 ist seitlich unten eine weitere Taste 27 vorgesehen, mit der auf Automatik-Betrieb umgeschaltet werden kann.

Schließlich ist am Bedienungshebel 7 noch eine Not-Aus-Taste 28 vorgesehen.

Eine weitere Not-Aus-Taste 29 ist am Gehäuse 2 oben vorgesehen und insbesondere rot eingefärbt.

Durch die Möglichkeit, die Funktionen des Mikrotoms 1 mit Hilfe des Bedienungshebels 7 durch Schwenken desselben und durch Betätigen der an ihm vorgesehenen Tasten zu steuern, ergibt sich der Vorteil, dass für das Steuern des Mikrotoms 1 lediglich eine Hand benötigt wird und die zweite Hand zum Abnehmen eines Schnittes vom Auflagebereich 12 des Messerträgers 6 frei bleibt.

Es versteht sich, dass an Stelle der in den Zeichnungen gezeigten Ausführungsform, die für das Betätigen des Bedienungshebels 7 mit der rechten Hand ausgelegt ist, auch eine Ausführungsform möglich ist, bei welcher der Bedienungshebel 7 für das Betätigen durch die linke Hand angeordnet ist. Dies erfolgt einfach durch eine spiegelbildliche Ausbildung des Mikrotoms 1 der in Fig. 1 bis 5 gezeigten Ausführungsform.

Zusammenfassend kann ein Ausführungsbeispiel der Erfindung wie folgt beschrieben werden:

Die Präparathalterung 5 eines Mikrotoms 1 ist über einen Kugelkopf 15 verschwenkbar. Zum Schwenken der Präparathalterung 5 sind dieser als Antriebe 8, 9 Stellmotoren zugeordnet. Am Messerträger 6 des Mikrotoms 1 sind zum Erfassen der Form und Legen des Präparates 10 eine Kamera 16 und Laserdioden 17 angeordnet.

## Patentansprüche

1. Mikrotom (1) zum Herstellen von Schnitten mit einer Präparathalterung (5), mit einem Messerträger (6) mit einem Messer (11) und mit Bedienelementen für das Einstellen des Mikrotoms (1) und für das Betätigen des Mikrotoms (1) beim Ausführen von Schneidvorgängen, **dadurch gekennzeichnet, dass** der Präparathalterung (5) wenigstens die Lage des Präparates erfassende Mittel (16, 17) zugeordnet sind und dass der Präparathalterung (5) ein Antrieb (8, 9) zum Verstellen der Präparathalterung (5) zugeordnet ist.

2. Mikrotom nach Anspruch 1, **dadurch gekennzeichnet, dass** die Mittel eine das Präparat (10) in der Präparathalterung (5) erfassende Kamera (16) umfassen.

3. Mikrotom nach Anspruch 1 oder 2, **dadurch gekennzeichnet, dass** die Mittel mehrere das Präparat (10) in der Präparathalterung (5) scannende Laserdioden (17) umfassen.

4. Mikrotom nach Anspruch 3, **dadurch gekennzeichnet, dass** die Scan-Ebenen der Laserdioden (17) in zueinander unterschiedlichen Ebenen ausgerichtet sind.

5. Mikrotom nach Anspruch 3 und 4, **dadurch gekennzeichnet, dass** die von der Kamera (16) und den Laserdioden (17) erfassten Daten der Form und Lage des Präparates (10) gespeichert und der Steuerung der Antriebe (8, 9) aufgegeben werden.

6. Mikrotom nach einem der Ansprüche 1 bis 5, **dadurch gekennzeichnet, dass** die Präparathalterung (5) über einen Kugelkopf (15) gehalten ist.

7. Mikrotom nach einem der Ansprüche 1 bis 6, **dadurch gekennzeichnet, dass** die Mittel, insbesondere die Kamera (16) und die Laserdioden (17) auf der der Präparathalterung (5) zugekehrten Seite des Messerträgers (6) angeordnet sind.

8. Mikrotom nach Anspruch 7, **dadurch gekennzeichnet, dass** die Präparathalterung (5) beim Erfassen der Form und Lage des Präparates (10) in eine dem Messerträger (6) gegenüberliegende Stellung abgesenkt wird.

9. Mikrotom nach Anspruch 8, **dadurch gekennzeichnet, dass** die Präparathalterung (5), vorzugsweise mehrfach, abgesenkt und angehoben wird.
